# FASCICULE DE BREVET EUROPEEN

(11) **EP 2 908 042 B1**
(45) Date de publication et mention de la délivrance du brevet: **03.08.2016**
(21) Numéro de dépôt: 15155177.7
(22) Date de dépôt: 16.02.2015
(51) Int. Cl.: F16L 37/113, F16L 37/36

(54) **Raccord à baïonnette adapté pour la jonction amovible de canalisations**
Bajonettverbindung zur lösbaren Verbindung von Kanalisationsrohren
Bayonet-type connector suitable for removable connection of pipes

(30) Priorité: 17.02.2014 FR 1451250
(43) Date de publication de la demande: 19.08.2015
(73) Titulaire: STAUBLI FAVERGES, 74210 Faverges (FR)
(72) Inventeur: Tiberghien, Alain-Christophe, 74320 Sevrier (FR); Durieux, Christophe, 73200 Gilly sur Isere (FR); Bahno, Igor, 73400 Ugine (FR)
(74) Mandataire: Myon, Gérard Jean-Pierre

(56) Documents cités:
- EP-A1- 2 141 402
- DE-U1- 9 007 363
- FR-A- 1 241 277
- US-A1- 2002 011 730

## Description

La présente invention concerne un raccord à baïonnette adapté pour la jonction amovible de canalisations.

EP-A-2 141 402 divulgue un raccord à baïonnette comprenant un élément femelle destiné à recevoir en emmanchement un élément mâle. L'élément femelle comprend un corps, une bague interne de verrouillage montée autour du corps et une bague externe de sécurité superposée sur la bague de verrouillage. La bague de verrouillage comporte des encoches prévues pour recevoir des pions de verrouillage en saillie disposés sur l'élément mâle, de manière à réaliser une fixation de type à baïonnette. Deux joints d'étanchéité sont situés dans la veine de fluide, au niveau des soupapes respectives des éléments mâle et femelle, ce qui les rend difficiles d'accès. Un troisième joint d'étanchéité est inaccessible car il est disposé dans une rainure interne du corps de l'élément femelle, et recouvert par la soupape femelle lorsque le raccord est dans une configuration désaccouplée.

Ce raccord n'est donc pas adapté à des fluides à haute température et/ou chimiquement actifs car les joints sont alors détériorés progressivement par le fluide et nécessitent d'être remplacés fréquemment.

De plus, la bague de sécurité a une géométrie complexe et elle est préférentiellement réalisée à partir d'un matériau synthétique permettant d'obtenir des griffes de verrouillage élastiques, ce qui est contre-indiqué pour une application de thermorégulation car les hautes températures du fluide affectent les caractéristiques mécaniques des griffes.

La bague de sécurité est montée par l'arrière du corps de l'élément femelle, pardessus la bague de verrouillage. De plus, la bague de verrouillage est elle-même montée autour du corps de l'élément femelle par l'arrière, ce qui limite d'autant plus le diamètre externe de l'extrémité arrière du corps et impose, pour des applications dans lesquelles l'élément femelle doit être raccordé à des canalisations de diamètre supérieur, l'ajout d'une pièce intermédiaire, et donc également l'ajout d'éléments d'étanchéité supplémentaires.

Le but de la présente invention est de proposer un raccord à baïonnette adapté à des fluides à haute température, notamment des températures supérieures à 200°C, ayant une maintenance simplifiée et incluant une bague de verrouillage de géométrie simplifiée adaptée notamment pour une application de thermorégulation de moules de presse à injecter. Un autre but de l'invention est de proposer un élément de raccord dont le corps est adapté pour coopérer directement avec une canalisation de fluide de diamètre relativement élevé.

A cet effet, l'invention a pour objet un raccord adapté pour la jonction amovible de canalisations, comprenant un élément de raccord et un élément de raccord complémentaire aptes à s'emmancher l'un dans l'autre selon un axe longitudinal, l'élément de raccord comprend :
- un premier corps,
- une bague de verrouillage montée autour du premier corps,
- des moyens de solidarisation en translation du premier corps avec la bague de verrouillage.
La bague de verrouillage comprend :
- une rainure apte à recevoir une partie en saillie radiale d'un deuxième corps de l'élément complémentaire,
- une encoche de verrouillage dans laquelle la partie en saillie est apte à être verrouillée axialement selon l'axe longitudinal par rapport au premier corps.
L'élément de raccord comprend un levier mobile en rotation radialement dans la rainure entre une position de blocage dans laquelle le levier bloque la partie en saillie dans l'encoche et une position de libération dans laquelle le levier autorise le passage de la partie en saillie entre l'encoche et la rainure, en ce que des moyens élastiques sont aptes à rappeler le levier vers la position de blocage.
L'élément de raccord comprend un joint d'étanchéité monté dans un logement ménagé sur une surface externe du premier corps et le joint d'étanchéité est apte à coopérer radialement avec le deuxième corps en configuration accouplée.

Grâce au raccord selon l'invention, un seul joint d'étanchéité placé au niveau de la surface externe du corps est sollicité à l'accouplement et au désaccouplement, ce qui facilite les manoeuvres d'accouplement et la maintenance car il suffit de remplacer le seul joint d'étanchéité, qui est accessible en configuration désaccouplée. De plus, la bague de verrouillage a une géométrie simplifiée car elle n'inclut pas de parties déformables élastiquement. Grâce aux moyens élastiques de rappel du levier sur la bague de verrouillage, il n'est pas nécessaire de réaliser la bague de verrouillage dans un matériau souple, ce qui permet d'employer un matériau qui résiste aux hautes températures, tel que l'acier.

Selon d'autres caractéristiques avantageuses du raccord conforme à l'invention, prises selon toutes les combinaisons techniquement admissibles :
- L'élément de raccord et/ou l'élément de raccord complémentaire comprennent une soupape chargée élastiquement en direction d'un siège formé dans le corps de l'élément de raccord recevant cette soupape. En configuration désaccouplée, chaque soupape est en contact direct étanche avec le siège.
- Le joint est disposé dans un espace annulaire, délimité radialement entre le premier corps et la bague de verrouillage, et l'épaisseur radiale minimale de l'espace annulaire en avant du joint est supérieure à la dimension radiale maximale de la section radiale du joint.
- Les moyens de solidarisation comprennent au moins une butée axiale et un élément de solidarisation, tel qu'une bille, coopérant avec une partie arrière de la bague de verrouillage. Sur la longueur d'une partie avant de l'élément de raccord, délimitée par la partie arrière de la bague de verrouillage et prise le long de l'axe longitudinal, la dimension radiale externe maximale du premier corps est inférieure à la dimension radiale interne minimale de la partie arrière de la bague de verrouillage.
- Une surface arrière du premier corps coopérant avec la partie arrière de la bague de verrouillage a un diamètre inférieur à la dimension radiale interne minimale de la partie arrière de la bague de verrouillage. Une première distance, mesurée parallèlement à l'axe longitudinal entre l'élément de solidarisation et la paroi de fond de la rainure, est inférieure à une deuxième distance, mesurée parallèlement à l'axe longitudinal entre la partie arrière de la bague de verrouillage et l'extrémité arrière de la surface arrière.
- Les moyens de solidarisation comprennent une couronne de billes disposées dans une rainure externe du premier corps et recouvertes radialement par la bague de verrouillage.
- La surface externe du premier corps comprend deux étages externes dont les diamètres augmentent le long de l'axe longitudinal, dans une direction allant de l'extrémité avant vers l'extrémité arrière du premier corps, la surface interne du deuxième corps comprend deux étages internes respectivement complémentaires aux deux étages externes et les deux étages externes coopèrent avec les deux étages internes dans la configuration accouplée du raccord.
- En cours d'accouplement du raccord, les deux étages externes coopèrent avec les deux étages internes avant que le joint coopère radialement de manière étanche avec le deuxième corps.
- Le raccord comprend des moyens d'indexage permettant de positionner la bague de verrouillage et le deuxième corps l'un par rapport à l'autre autour de l'axe longitudinal dans une configuration indexée qui intervient, en cours d'accouplement du raccord, avant le contact entre la partie en saillie et le levier.
- Lorsque la partie en saillie est bloquée dans l'encoche, une surface latérale de la partie en saillie est apte à venir en contact surfacique avec une paroi de fond de l'encoche.
- Lorsque la partie en saillie est bloquée dans l'encoche, une surface latérale de la partie en saillie est apte à venir en contact surfacique avec le levier, la normale au contact surfacique entre la surface latérale de la partie en saillie et le levier est orientée selon une direction parallèle à l'axe de rotation du levier.
- Lorsque la partie en saillie est bloquée dans l'encoche, une extrémité arrière de la partie en saillie est apte à venir en contact surfacique avec un bord avant de l'encoche.
- L'encoche s'étend selon une direction circonférentielle par rapport à l'axe longitudinal.
- Chaque rainure est orientée selon l'axe longitudinal, et pour chaque rainure, l'encoche de verrouillage comprend une première partie et une deuxième partie s'étendant de part et d'autre de la rainure, l'élément en saillie pouvant être reçu dans la première ou la deuxième partie de l'encoche.
- La surface externe de la bague de verrouillage est pourvue d'une empreinte d'outil, notamment six pans, ménagée autour de l'axe longitudinal.

L'invention sera mieux comprise à la lecture de la description qui va suivre, donnée uniquement à titre d'exemple nullement limitatif et faite en se référant aux dessins annexés sur lesquels :
- la figure 1 est une vue en perspective d'un élément de raccord et d'un élément de raccord complémentaire faisant partie d'un raccord à baïonnette selon la présente invention, en configuration désaccouplée ;
- la figure 2 est une coupe longitudinale des éléments du raccord de la figure 1, en configuration désaccouplée ;
- la figure 3 est une vue en perspective éclatée de l'élément de raccord ;
- la figure 4 est une vue de dessus de l'élément de raccord en cours d'assemblage ;
- la figure 5 est une coupe longitudinale du raccord dans une configuration indexée de l'élément de raccord avec l'élément de raccord complémentaire ;
- la figure 6 est une coupe du raccord en cours d'accouplement
- la figure 7 est une coupe longitudinale du raccord en configuration verrouillée, l'élément de raccord complémentaire étant vissé sur un support ;
- la figure 8 est une coupe transversale à plus grande échelle selon la ligne VIII-VIII à la figure 7, le support n'étant pas représenté ;
- la figure 9 est une vue en perspective et à plus grande échelle vu dans le sens de la flèche F9 à la figure 8;
- la figure 10 est une coupe analogue à la figure 8 du raccord en configuration accouplée ;
- la figure 11 est une coupe analogue à la figure 8 montrant le dévissage de l'élément complémentaire de son support ;
- la figure 12 est une vue à plus grande échelle de l'élément de raccord de la figure 1 ;
- la figure 13 est une vue en perspective d'un élément de raccord conforme à une variante de l'invention,
- la figure 14 est une coupe analogue à la figure 8 de l'élément de raccord de la figure 13.

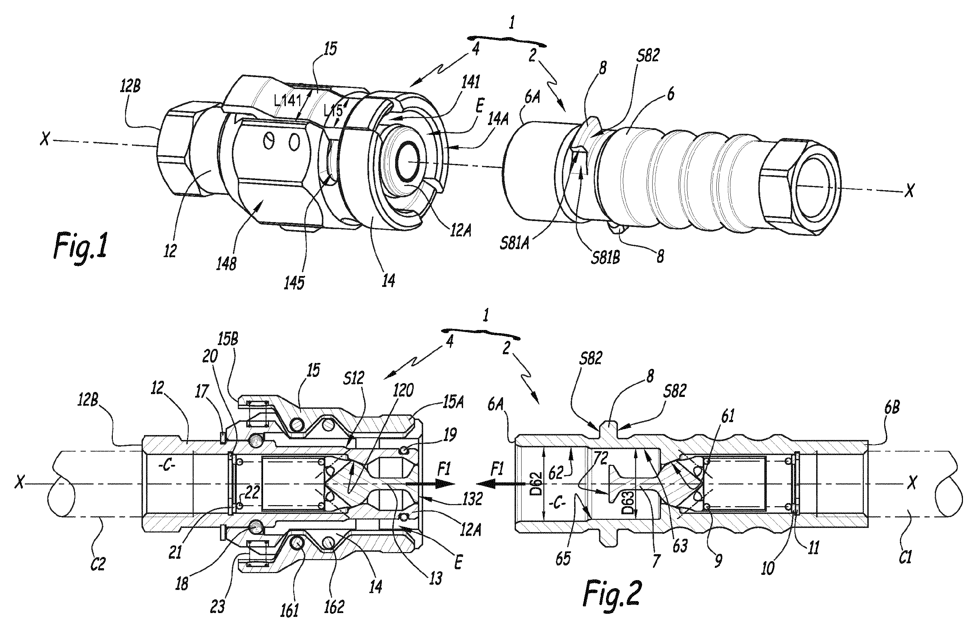

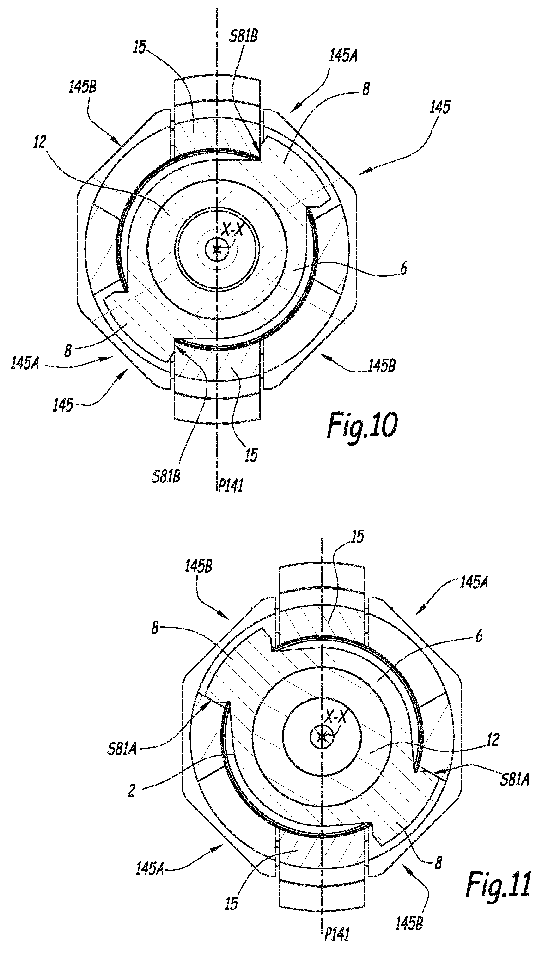

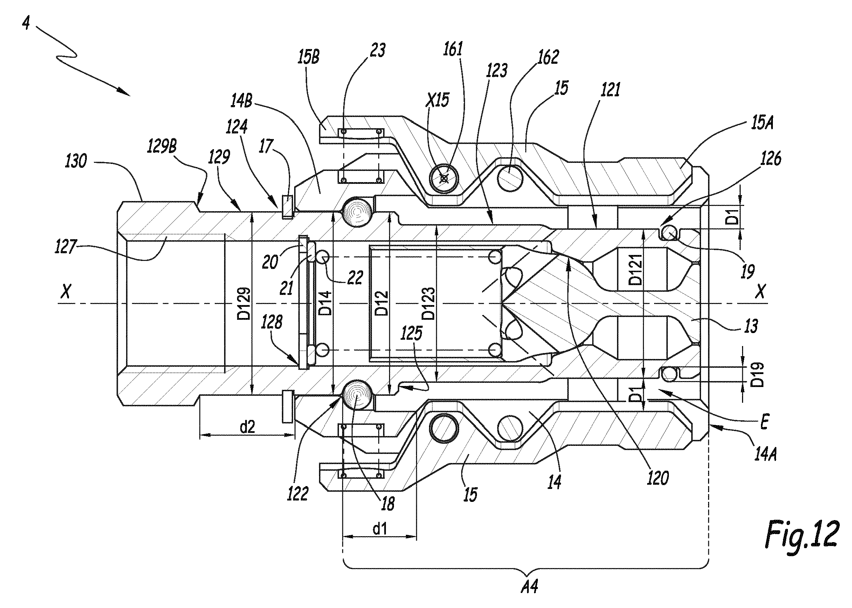

Les figures 1 à 12 représentent un raccord à baïonnette 1, comprenant un élément de raccord 4 conformé en un élément femelle, et un élément de raccord complémentaire 2 conformé en un élément mâle. Chaque élément 2 et 4 est adapté pour la jonction amovible de deux canalisations et comprend une partie arrière respectivement raccordée fluidiquement à une canalisation C1 ou C2, représentée en traits mixtes uniquement à la figure 2. Les deux éléments 2 et 4 sont globalement tubulaires et complémentaires l'un de l'autre, de sorte qu'ils sont capables de s'emmancher suivant un axe longitudinal X-X commun à ces deux éléments.

Le terme « avant » désigne les parties des éléments 2 et 4 qui sont situées, le long de l'axe longitudinal X-X, vers l'autre élément 2 ou 4 lorsque les éléments 2 et 4 sont disjoints et que le raccord 1 est sur le point d'être connecté, en opposition avec les parties des éléments qualifiées « d'arrière » qui sont situées, le long de l'axe longitudinal X-X, du côté de la canalisation C1 ou C2 raccordée à cet élément 2 ou 4.

Les termes « intérieur » ou « interne » et « extérieur » ou « externe » font référence à un canal C de passage du fluide dans le raccord 1 accouplé. Les éléments « intérieurs » ou « internes » sont tournés vers le canal C et les éléments « extérieurs » ou « externes » sont tournés à l'opposé du canal C.

Le terme « radial » ou « radialement » fait référence à une direction perpendiculaire et sécante à l'axe longitudinal X-X.

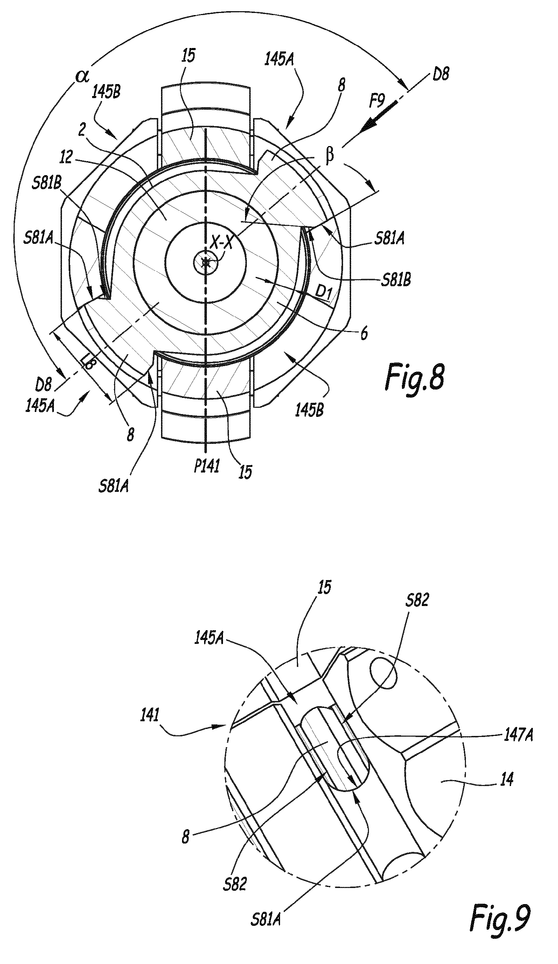

L'élément de raccord complémentaire 2 comprend un corps 6, dit deuxième corps, globalement tubulaire et à section circulaire qui délimite le canal C. Le corps 6 comporte deux pions de verrouillage 8, qui font chacun saillie radialement vers l'extérieur par rapport au corps 6. Les pions 8 s'étendent de part et d'autre de deux plans de symétrie D8 radiaux et diamétralement opposés formant entre eux un angle α de 180° dans la représentation de la figure 8.

Chaque pion 8 est globalement en forme d'une portion d'anneau centrée sur l'axe X-X et délimitée latéralement, de chaque côté, par des première et deuxième surfaces S81A et S81B non parallèles entre elles. La première surface S81A est une surface convexe en forme de portion de cylindre dont la génératrice est orientée globalement parallèlement au plan D8, de préférence à plus ou moins 15° au maximum par rapport à une direction parfaitement radiale. La deuxième surface S81 B est plane et forme un angle obtus β avec une génératrice de la surface S81A, l'angle β étant situé du côté de la zone médiane du pion 8 dans la représentation de la figure 8

On note L8 la largeur maximale de chaque pion 8, mesurée entre les premières surfaces latérales S81A selon une direction circonférentielle, c'est-à-dire une direction orthoradiale par rapport à l'axe longitudinal X-X.

Les extrémités avant et arrière de chaque pion 8 sont chacune délimitées par une surface plane S82 globalement en forme de portion d'anneau, qui est perpendiculaire à l'axe longitudinal X-X.

La surface externe du corps 12 est apte à coopérer radialement avec le corps 6 en configuration accouplée du raccord 1.

Une soupape 7 est montée dans le corps 6 et est chargée élastiquement par un ressort 9 en direction d'un siège 61 formé par le corps 6. L'extrémité arrière du ressort 9 est en appui contre une bague 10 montée à l'intérieur du corps 6 et retenue axialement par un premier anneau élastique métallique 11 logé dans une rainure ménagée à l'intérieur du corps 6.

Lorsque la soupape 7 est en appui sur le siège 61, l'étanchéité entre la soupape 7 et le corps 6 est assurée uniquement par le contact direct étanche entre les matériaux métalliques qui composent la soupape 7 et le corps 6. En d'autres termes, en position d'étanchéité, la totalité de la zone de contact entre le corps 6 et la soupape 7 est formée par les surfaces métalliques du corps 6 et de la soupape 7. Ainsi, aucun joint d'étanchéité rapporté n'est nécessaire pour assurer l'étanchéité entre la soupape 7 et le corps 6. La zone de contact est formée par une surface tronconique du siège 61 et par une surface incurvée convexe de la soupape 7, de forme complémentaire.

L'élément de raccord 4 comprend un corps 12, dit premier corps, globalement tubulaire et à section circulaire qui délimite le canal C. Une bague de verrouillage 14 à section globalement circulaire, coaxiale avec le corps 12 et centrée sur l'axe longitudinal X-X, est montée autour du corps 12.

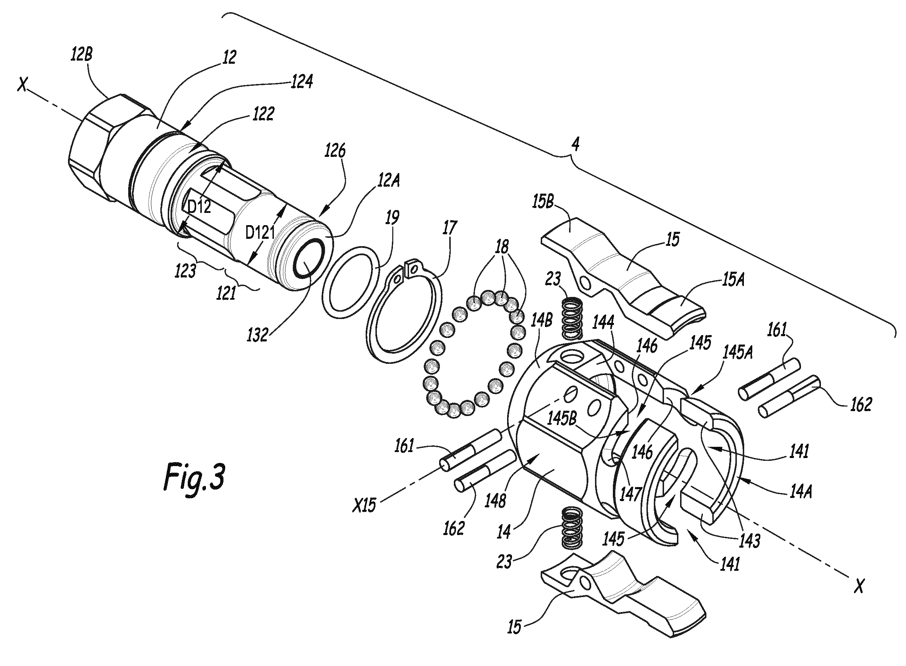

Un deuxième anneau élastique métallique 17 externe est monté dans une rainure 124 ménagée dans une surface externe du corps 12 et forme une butée axiale pour la bague 14. Une couronne de plusieurs billes 18 est disposée autour de l'axe longitudinal X-X dans une rainure externe 122 du corps 12, visible à la figure 3 et située du côté d'une extrémité avant 12A du corps 12 par rapport à la rainure 124. Les billes 18 et le deuxième anneau élastique 17 forment des moyens de solidarisation en translation de la bague de verrouillage 14 avec le corps 12.

L'extrémité arrière 12B du corps 12 comporte un filetage interne 127 prévu pour coopérer avec un filetage externe de la canalisation C2.

La bague de verrouillage 14 est solidaire axialement du corps 12. Une partie arrière 14B de la bague de verrouillage 14 est retenue axialement sur le corps 12 entre le deuxième anneau élastique 17 et les billes 18. Le long de l'axe longitudinal X-X et dans une première direction allant d'une extrémité arrière 12B du corps 12 et vers son extrémité avant 12A, la partie arrière 14B de la bague de verrouillage 14 est retenue par les billes 18. Le long de l'axe longitudinal X-X et dans une direction opposée allant de l'extrémité avant 12A du corps 12 vers son extrémité arrière 12B, la partie arrière 14B de la bague de verrouillage 14 est retenue par le deuxième anneau élastique 17.

Le corps 12 est équipé d'un joint d'étanchéité 19 externe, c'est-à-dire monté sur l'extérieur du corps 12, de préférence en élastomère, qui est logé dans une gorge périphérique externe 126 du corps 12 à proximité de son extrémité avant 12A . Le joint 19 est l'unique élément d'étanchéité rapporté du raccord 1. L'élément de raccord 4 comporte ainsi un seul joint d'étanchéité rapporté, à savoir le joint 19, et l'élément de raccord complémentaire 2 ne comporte aucun élément d'étanchéité rapporté.

Le corps 12 de l'élément de raccord 4 comporte une gorge interne 128 qui reçoit un troisième anneau élastique métallique 20 logé à l'intérieur du corps 12, contre lequel vient en appui une bague interne 21 servant de butée à un ressort 22 qui exerce un effort élastique sur une soupape 13 de façon à la plaquer contre un siège 120 formé dans le corps 12.

On note A4 une partie avant de l'élément de raccord 4, s'étendant le long de l'axe X-X entre l'extrémité avant 12A du corps 12 et la partie arrière 14B de la bague de verrouillage 14 solidarisée axialement sur le corps 12. La partie avant A4 délimite une partie avant du corps 12. Sur toute la longueur de la partie avant A4, le long de l'axe longitudinal X-X, la dimension externe radiale maximale du corps 12 est inférieure à la dimension interne radiale minimale de la bague de verrouillage 14. En particulier, cette dimension radiale externe maximale du corps 12 est inférieure au diamètre interne D14 de la partie arrière 14B. Ainsi, sur toute la longueur de la partie avant A4 de l'élément de raccord 4, prise le long de l'axe longitudinal X-X, la dimension radiale externe maximale du corps 12 est inférieure à la dimension radiale interne minimale de la partie arrière 14B de la bague de verrouillage 14.

Au niveau de la partie avant A4, la surface externe du corps 12 de l'élément de raccord 4 comprend un étage avant 121 et un étage intermédiaire 123 formant des étages externes. Les étages 121 et 123 sont des surfaces externes cylindriques à section circulaire, raccordées l'une à l'autre par une surface tronconique S12. Le diamètre D121 de l'étage avant 121 est légèrement inférieur au diamètre D123 de l'étage intermédiaire 123. Le diamètre des étages 121 et 123 augmente le long de l'axe longitudinal X-X et dans une direction allant de l'extrémité avant 12A du corps 12 vers son extrémité arrière 12B.

La surface radiale interne du corps 6 de l'élément de raccord complémentaire 2 comporte un étage avant 62 et un étage arrière 63 qui sont deux surfaces cylindriques internes à section circulaire dont les diamètres internes respectifs D62 et D63 augmentent en se rapprochant axialement de l'extrémité avant 6A du corps 6. L'étage arrière 63 a un diamètre D63 plus grand que l'étage avant D62 et est axialement plus proche de l'extrémité avant 6A. Les portions 62 et 63 sont raccordés l'un à l'autre par une surface tronconique 65.

Le diamètre interne D62 de la portion avant 62 est sensiblement égal au diamètre D123 de la portion arrière 123. Le diamètre interne D63 de la portion arrière 63 est sensiblement égal au diamètre D121 de la portion avant 121. Ainsi, les étages 62 et 123 d'une part, et les étages 63 et 121 d'autre part, sont complémentaires.

L'étage 123 du corps 12 est prolongé vers l'extrémité arrière 12B par une surface arrière 129 dont le diamètre D129 est constant et strictement supérieur au diamètre D123 de l'étage 123. La surface arrière externe 129 loge les billes 18 et l'anneau élastique 17. Le diamètre D129 est strictement inférieur au diamètre interne de la partie arrière 14B pour permettre à la partie arrière 14B de la bague 14 d'être mise en place autour de la surface arrière 129. En variante, le diamètre D129 est variable le long de l'axe longitudinal X-X tout en restant inférieur au diamètre interne de la partie arrière 14B.

La surface arrière 129 est limitée vers l'extrémité arrière 12B du corps 12 par une extrémité arrière 129B à partir de laquelle le corps 12 présente une dimension radiale supérieure au diamètre interne de la partie arrière 14B.

L'étanchéité entre le corps 12 et la soupape 13 est réalisée de manière similaire à l'étanchéité entre le corps 6 et la soupape 7. Lorsque la soupape 13 est en appui sur le siège 120, l'étanchéité entre la soupape 13 et le corps 12 est assurée uniquement par le contact direct étanche entre les matériaux métalliques qui composent la soupape 13 et le corps 12. En d'autres termes, en position d'étanchéité, la totalité de la zone de contact entre le corps 12 et la soupape 13 est formée par les surfaces métalliques du corps 12 et de la soupape 13. Ainsi, aucun joint d'étanchéité rapporté n'est nécessaire pour assurer l'étanchéité entre la soupape 13 et le corps 12. La zone de contact est formée par une surface tronconique du siège 120 et une surface incurvée convexe de la soupape 13, de forme complémentaire.

La bague de verrouillage 14 de l'élément de raccord 4 est mobile en rotation par rapport au corps 12 autour de l'axe longitudinal X-X.

La bague de verrouillage 14 est munie de deux rainures 141 longitudinales, régulièrement réparties autour de l'axe longitudinal X-X de manière à pouvoir recevoir simultanément les deux pions de verrouillage 8 de l'élément de raccord complémentaire 2. Chaque rainure 141 est débouchante sur l'avant de la bague de verrouillage 14, c'est-à-dire au niveau de sa face avant 14A.

Chaque rainure 141 s'étend sur toute l'épaisseur radiale de la bague de verrouillage 14, à partir d'une embouchure 143 formée dans la face avant 14A. Chaque rainure 141 se termine, à l'opposé de l'embouchure 143, par une paroi de fond 144 située du côté de la partie arrière 14B de la bague de verrouillage 14 par rapport à l'embouchure 143. Les rainures 141 sont de forme rectiligne et s'étendent parallèlement à l'axe longitudinal X-X.

Chaque rainure 141 s'étend de part et d'autre d'un plan médian P141 passant par l'axe X-X et s'étendant selon une direction radiale. Le plan P141 est un plan de symétrie pour la rainure 141.

Entre l'embouchure 143 et la paroi de fond 144, chaque rainure 141 est prolongée selon une direction orientée circonférentiellement, c'est-à-dire une direction orthoradiale par rapport à l'axe longitudinal X-X, par une encoche de verrouillage 145 qui comprend une première partie 145A s'étendant d'un premier côté de la rainure 141, et une deuxième partie 145B s'étendant de l'autre côté de la rainure 141. Les deux parties 145A et 145B s'étendent au même niveau le long de l'axe X-X et sont situées de part et d'autre du plan P141.

Chaque partie 145A et 145B comporte respectivement une embouchure 146A ou 146B qui débouche dans la rainure 141, ainsi qu'une paroi de fond 147A ou 147B opposée à l'embouchure correspondante 146A ou 146B.

Deux leviers 15 sont montés articulés sur la bague de verrouillage 14. Chaque levier 15 est prévu pour être reçus partiellement dans l'une des rainures 141 de la bague de verrouillage 14, en configuration accouplée et désaccouplée du raccord 1.

Chaque levier 15 a globalement la forme d'une portion de tore centré sur l'axe X-X, délimitée par deux bords longitudinaux parallèles entre eux. Les bords longitudinaux sont parallèles à un plan de symétrie radial du levier 15 passant par l'axe X-X. La largeur L15 de chaque levier, mesurée selon une direction circonférentielle par rapport à l'axe longitudinal X-X, est sensiblement égale, aux jeux fonctionnels près, à la largeur L141 de la rainure 141 recevant ce levier 15.

Chaque levier 15 est monté rotatif sur la bague de verrouillage 14, au moyen d'un arbre 161 aligné sur un axe X15 orthoradial par rapport à l'axe longitudinal X-X, perpendiculaire aux plans de symétrie de la rainure 141 et du levier 15. L'arbre 161 s'étend le long de l'axe X-X, entre la partie arrière 14B de la bague de verrouillage 14 et l'encoche 145. Les leviers 15 sont mobiles radialement dans les rainures 141. Les extrémités des arbres 161 sont logées dans des ouvertures ménagées dans la bague de verrouillage 14. Ainsi, les leviers 15 sont mobiles en rotation par rapport à la bague 14, autour des axes X15 orthoradiaux par rapport à l'axe longitudinal X-X. Dans un premier sens de rotation tendant à écarter radialement les extrémités avant 15A des leviers 15 de la bague de verrouillage 14, le mouvement de rotation des leviers 15 est limité par l'appui de l'extrémité arrière 15B des leviers 15 contre la bague de verrouillage 14. Dans l'autre sens, la rotation des leviers 15 est limitée par des arbres 162 servant de butée au levier 15. Les arbres 162 sont parallèles aux arbres 161 et leurs extrémités sont logées dans des trous ménagés dans la bague de verrouillage 14.

Un moyen de rappel élastique 23, tel qu'un ressort de compression, est intercalé radialement entre la bague de verrouillage 14 et l'extrémité arrière de chaque levier 15, et exerce un effort élastique qui repousse par défaut le levier 15 contre l'arbre 162, dans une position de blocage dans laquelle le levier 15 est logé à l'intérieur les rainures 141.

La gorge périphérique externe 126 du joint 19 est disposée au niveau de l'étage avant 121, à proximité de l'extrémité avant 15A des leviers 15, plus particulièrement le long de l'axe X-X entre les encoches 145 et l'extrémité avant 15A des leviers 15.

Lors de la fabrication de l'élément 4, l'assemblage de l'élément 4 est réalisé en montant d'abord un seul levier 15 sur la bague de verrouillage 14, au moyen d'un premier arbre 161. Un ressort 23 est disposé radialement entre l'extrémité arrière 15B du levier 15 et la partie arrière 14B de la bague de verrouillage 14. Le deuxième arbre 162 est mis en place dans les ouvertures de la bague de verrouillage 14 prévues à cet effet. Puis, la bague de verrouillage 14 est montée autour du corps 12, plus précisément autour de la surface arrière 129, par l'extrémité avant 12A du corps 12, jusqu'à une position reculée dans laquelle, d'une part, l'extrémité arrière de la partie arrière 14B est axialement alignée avec l'extrémité arrière 129B de la surface arrière 129 et, d'autre part, la partie arrière de la rainure 141 dépourvue de levier 15 est alignée axialement le long de l'axe longitudinal X-X avec la rainure 122 destinée à recevoir les billes 18. Cette position reculée rend possible l'introduction des billes 18 dans la rainure 122. En configuration solidarisée de la bague de verrouillage 14 sur le corps 12, une distance d1, mesurée parallèlement à l'axe longitudinal X-X entre les billes 18, au niveau de l'extrémité arrière de la rainure 122, et la paroi de fond 144 de la rainure 141, est inférieure à une distance d2, mesurée parallèlement à l'axe longitudinal X-X entre l'extrémité arrière de la partie arrière 14B et l'extrémité arrière 129B de la surface arrière 129, ce qui rend possible l'introduction des billes 18 dans la rainure 122 par la rainure 141 avec la bague de verrouillage 14 en position reculée pour l'assemblage de l'élément 4.

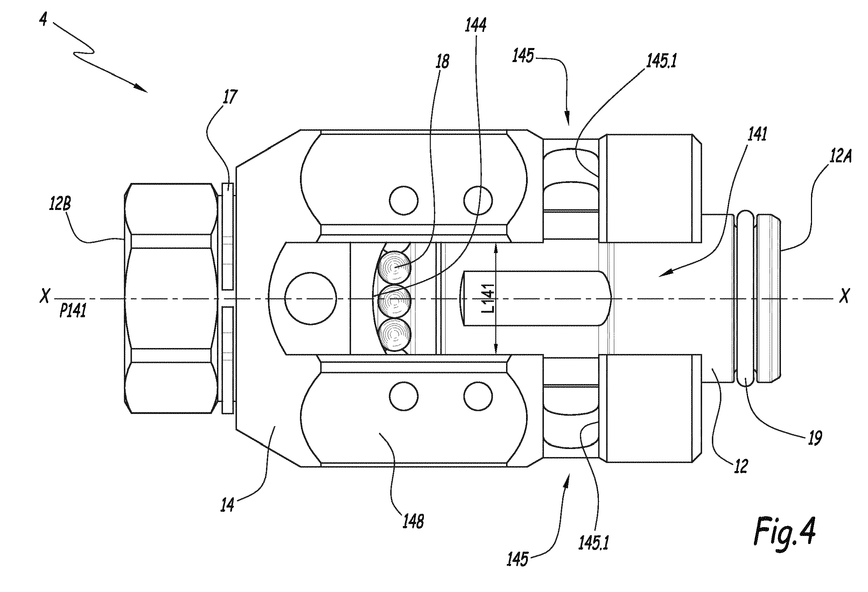

Puis, les billes 18 sont introduites une à une dans la rainure 122 par la rainure 141 dépourvue de levier 15. Les rainures 141 traversent toute l'épaisseur de la bague de verrouillage 14, comme représenté à la figure 4. La distance d2 forme un dégagement de la bague de verrouillage 14 vers l'extrémité arrière 12B du corps 12, au niveau de la surface arrière 129, permettant l'introduction des billes 18 dans la rainure 141 avec la bague de verrouillage 14 en position reculée. En effet, la surface arrière 129 est limité vers l'extrémité arrière 12B du corps 12 par une portion 130 de diamètre supérieur au diamètre D129. Pour permettre l'introduction des billes 18, le diamètre des billes 18 est inférieur ou égal à la largeur L141 des rainures 141, mesurée dans une direction orthoradiale à l'axe longitudinal X-X. Le diamètre des billes 18 correspond à la dimension maximale des billes 18.

Ensuite, une fois que la couronne de billes 18 est mise en place dans la rainure 122, la bague de verrouillage 14 est avancée jusqu'à ce que la partie arrière 14B de la bague 14 arrive en contact avec les billes 18, qui sont alors toutes recouvertes radialement par la bague 14. La partie arrière 14B de la bague de verrouillage 14 coopère alors avec la surface arrière 129 du corps 12. Puis, l'anneau élastique 17 est mis en place dans la rainure 124 afin d'immobiliser axialement la bague 14. Enfin, le deuxième levier 15 est monté sur la bague de verrouillage 14, au moyen du deuxième arbre 161.

En configuration désaccouplée, les éléments 2 et 4 sont disjoints, comme représenté sur les figures 1 et 2. Pour les connecter, l'utilisateur rapproche les deux éléments 2 et 4 selon les flèches F1, dont l'orientation est parallèle à l'axe longitudinal X-X.

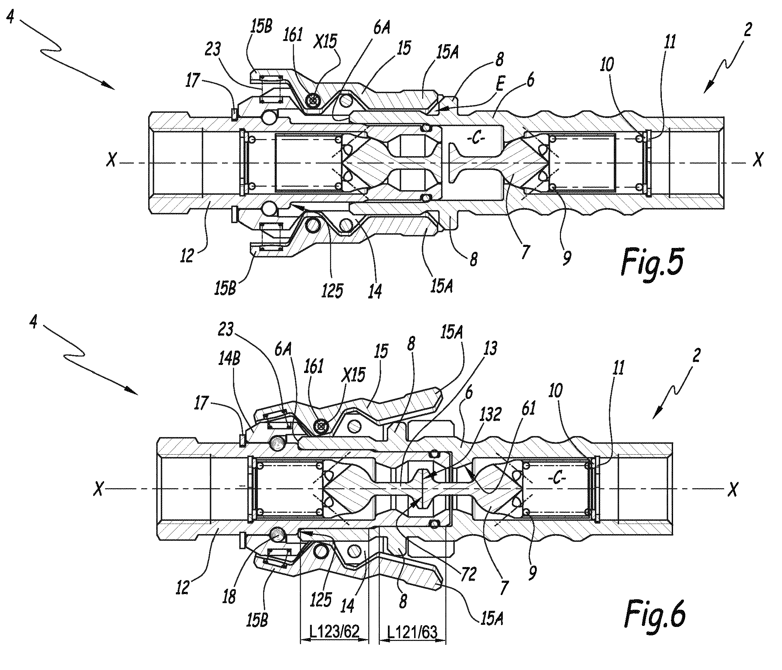

Le raccord 1 est alors amené dans une configuration indexée, représenté à la figure 5, dans laquelle l'extrémité avant 6A du corps 6 de l'élément de raccord complémentaire 2 est introduite dans l'élément de raccord 4, dans un espace annulaire E délimité radialement entre le corps 12 et la bague de verrouillage 14.

Au niveau de la partie avant A4 de l'élément de raccord 4, la dimension externe maximale D12 du corps 12 est strictement inférieure à la dimension interne minimale D14 de la bague de verrouillage 14, de manière à ménager l'espace annulaire E.

On note D1 une épaisseur minimale de l'espace annulaire E, mesurée radialement en avant du joint 19, c'est-à-dire le long de l'axe longitudinal X-X entre l'extrémité arrière de la gorge 126 et l'extrémité avant 12A du corps 12.

Le long de l'axe longitudinal X-X, le joint 19 est situé en retrait à l'intérieur de l'espace annulaire E par rapport à l'extrémité avant 12A du corps 12 de l'élément 4.

Chaque pion de verrouillage 8 s'engage dans l'une des rainures 141 de la bague de verrouillage 14, de manière à réaliser un indexage angulaire, autour de l'axe longitudinal X-X, de l'élément de raccord complémentaire 2 par rapport à l'élément de raccord 4. Les pions de verrouillage 8 et les rainures 141 forment donc les moyens d'indexage autour de l'axe longitudinal X-X du corps 6 par rapport à la bague de verrouillage 14. La largeur L141 des rainures 141 est sensiblement égale à la largeur L8 des pions de verrouillage 8, de manière à réaliser un guidage en translation de l'élément de raccord complémentaire 2 par rapport à la bague de verrouillage 14. Au cours de la progression de l'élément complémentaire 2 dans l'élément 4, cet indexage angulaire se produit avant le contact entre l'étage arrière 63 du corps 6 de l'élément de raccord complémentaire 2 et le joint 19 ainsi qu'avant le contact des pions 8 avec les leviers 15, comme visible à la figure 5.

Lors de l'accouplement, l'étage avant 62 de l'élément complémentaire 2 coopère avec l'étage avant 121 de l'élément 4, avec un jeu radial important entre les surfaces de ces deux étages. Ce jeu radial résulte de la différence des diamètres D62 et D121. Puis, l'étage avant 62 s'engage autour de l'étage arrière 123 avec un jeu radial réduit et l'étage arrière 63 s'engage autour de l'étage avant 121 avec un jeu radial réduit, de manière à réaliser un double guidage en translation de l'élément de raccord complémentaire 2 dans l'élément de raccord 4. Le double guidage commence avant contact des pions 8 avec les leviers 15.

La figure 6 représente une configuration en cours d'accouplement, postérieure à la configuration indexée, dans laquelle le corps 6 de l'élément complémentaire 2 a continué de progresser dans l'élément 4, de sorte que les pions 8 ont avancé vers la paroi de fond 144 des rainures 141. Les leviers 15 sont soulevés par les pions 8, grâce à un contact glissant entre les pions 8 et les parties des leviers 15 préalablement engagées dans les rainures 141. Les leviers 15 sont soulevés à l'encontre des efforts élastiques exercés par les ressorts 23 dans une position de libération, dans laquelle les leviers 15 autorisent le passage des pions 8 entre les parties 145A et 145B de l'encoche 145 et la rainure 141.

L'extrémité avant 6A du corps 6 de l'élément complémentaire 2 arrive en butée contre un épaulement externe 125 formé dans le corps 12 de l'élément de raccord 4.

Une face avant plane 72 de la soupape 7 de l'élément de raccord complémentaire 2 entre en contact avec une face avant plane 132 de la soupape 13 de l'élément de raccord 4. Les soupapes 7 et 13 sont repoussées hors de leur siège 61 ou 120, à l'encontre des efforts de rappel des ressorts 9 et 22. La circulation du fluide dans le canal C entre les éléments 2 et 4 est alors permise.

En vue de verrouiller le raccord 1, il est nécessaire d'effectuer un mouvement de rotation de la bague de verrouillage 14 par rapport au corps 6 de l'élément de raccord complémentaire 2, afin d'amener les pions 8 dans l'une des parties 145A ou 145B des encoches de verrouillage 145. Lorsque l'élément complémentaire 2 est raccordé préalablement à la canalisation C1, les pions 8 peuvent être amenés indifféremment dans la partie 145A ou 145B des encoches 145. Les pions 8 sont tous amenés dans la partie 145A des encoches 145, ou en alternative tous amenés dans la partie 145B des encoches 145, en fonction du sens du mouvement de rotation.

Les pions 8 sont alors décalés angulairement par rapport aux leviers 15, qui sont rappelés élastiquement en position de blocage par les ressorts 23. Dans la position de blocage, les leviers 15 bloquent les pions 8 dans les encoches 145 et empêchent la sortie des pions 8 hors des encoches 145 vers les rainures 141, grâce à l'appui surfacique des deuxièmes surfaces latérales S81 B des pions 8 contre un bord longitudinal des leviers 15. Le raccord 1 est alors dans une configuration verrouillée, dans laquelle les pions 8 sont verrouillés axialement par rapport au corps 12 dans les encoches 145. Autrement dit, la bague de verrouillage 14 bloque le retrait de l'élément complémentaire 2 hors de l'élément 4.

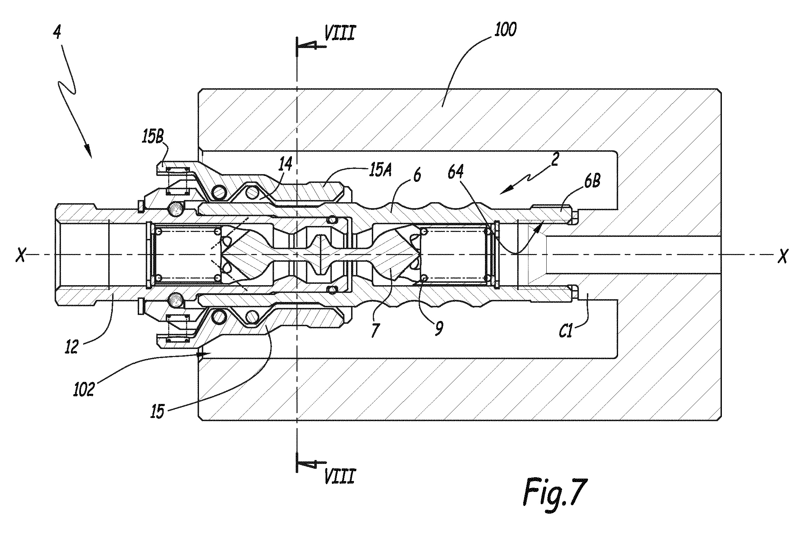

La figure 7 montre le raccord 1 et un support 100 de la canalisation C1. A la figure 7 la canalisation C1 n'est pas représentée, pour la clarté du dessin. Le raccord 1 est dans une configuration accouplée et verrouillée, dans laquelle le fluide peut transiter dans le canal C entre les éléments 2 et 4. L'extrémité arrière 6B du corps 6 de l'élément complémentaire 2 est pourvue d'un filetage interne 64 qui coopère de manière étanche avec un filetage externe de la canalisation C1. Dans la configuration de la figure 7, l'élément 2 est vissé de manière étanche sur la canalisation C1 préalablement à l'accouplement des éléments 2 et 4. Lors du verrouillage, l'opérateur entraine en rotation la bague de verrouillage 14 par rapport à l'élément complémentaire 2 afin de placer les pions 8 dans l'une des deux parties 145A ou 145B des encoches 145, indifféremment.

Dans le cas où l'élément de raccord complémentaire 2 n'est pas vissé au support 100 préalablement à l'accouplement des éléments 2 et 4, l'élément de raccord 4 est utilisé pour visser l'élément complémentaire 2 sur le support 100. A cet effet, lorsque l'extrémité avant 6A du corps 6 de l'élément 2 est en butée contre l'épaulement 125 du corps 12 de l'élément 4, les pions de verrouillage 8 sont engagés dans l'encoche 145 en effectuant un mouvement de rotation du corps 6 de l'élément 2 dans le sens qui correspond au sens de vissage de l'élément 2 sur le support 100. Par exemple, dans l'exemple de la figure 8, le pas de vis est à droite et les pions 8 sont amenés dans les parties 145A des encoches 145.

Pour visser l'élément 2 sur le support 100, la surface externe de la bague de verrouillage 14 est pourvue d'une empreinte d'outil 148, par exemple à six pans externes, prévue pour coopérer avec un outil complémentaire tel qu'une clé, permettant de transmettre le couple de vissage à la bague de verrouillage 14 et entrainer ainsi en rotation le corps 6 par l'intermédiaire du contact entre les premières surfaces S81A des pions 8 et la paroi de fond 147A des encoches 145A. Ce contact est un contact surfacique afin d'assurer une transmission satisfaisante du couple de vissage, qui peut être élevé. L'outil permet le vissage de l'élément 2 sur la canalisation C1 dans le cas où le support 100 forme un puits 102 qui entoure le raccord 1 et rend l'élément complémentaire 2 inaccessible à main nue. L'empreinte d'outil 148 dépasse axialement du puits 102 lorsque l'élément complémentaire 2 est complètement vissé avec la canalisation C1. Autrement dit l'empreinte d'outil 148 est disposée axialement au moins partiellement à l'arrière de l'épaulement externe 125, ce qui permet de réduire les dimensions radiales du puits 102.

Lorsque l'élément complémentaire 2 est complètement vissé sur la canalisation C1, il est alors possible d'alimenter la canalisation C1 ou C2 pour faire circuler un fluide dans le canal C entre l'élément de raccord 4 et l'élément de raccord complémentaire 2.

Lorsque le raccord est dans la configuration accouplée, les efforts de répulsion des éléments 2 et 4 engendrés par les ressorts 22 et 9 sont transmis de l'élément 2 à l'élément 4 par les surfaces planes arrière S82 des pions 8, qui sont en contact dans la direction longitudinale avec les bords avant 145.1 des encoches 145. Ce contact surfacique a une aire étendue, ce qui garantit une bonne transmission des efforts d'écartement des corps 12 et 6. De plus, les leviers 15 n'encaissent pas ces efforts de répulsion, ce qui est favorable pour la tenue mécanique du raccord 1.

En configuration verrouillée du raccord 1, les leviers 15 s'opposent au déverrouillage des pions 8 hors des encoches 145, par exemple en cas de vibrations. Les leviers 15 s'étendent sur toute la profondeur des encoches 145, ce qui permet d'obtenir un contact surfacique étendu entre les deuxièmes surfaces S81 B des pions 8 et les bords longitudinaux des leviers 15, et sécurise le verrouillage du raccord 1. La normale à ce contact surfacique est orientée selon une direction orthoradiale parallèle à l'axe X15. En variante, la normale forme un angle incliné au maximum de plus ou moins 15° par rapport à cette direction orthoradiale. Ainsi, les efforts des pions 8 reçus dans les encoches 145A ou 145B contre les leviers 15 en position de blocage ne provoquent pas de soulèvement des leviers 15 vers leur position de libération des pions 8.

Les surfaces radiales externes des étages 121 et 123 du corps 12 sont complémentaires aux surfaces radiales internes des étages 62 et 63 de la surface interne du corps 6.

En configuration complètement emmanchée des éléments 2 et 4, l'étage 121 de plus petit diamètre de l'élément 4 est emmanché au niveau de l'étage 63 de plus petit diamètre de l'élément complémentaire 2, et l'étage 121 recouvre l'étage 63 sur une longueur de recouvrement L121/63. De même, dans cette configuration, l'étage 123 de plus grand diamètre 123 de l'élément 4 est emmanché au niveau de l'étage 62 de plus petit diamètre de l'élément complémentaire 2, et l'étage 123 recouvre l'étage 62 sur une longueur de recouvrement L123/62. Lors de l'accouplement des éléments 2 et 4, le double guidage commence avant qu'il y ait un contact franc entre le corps 6, au niveau de l'étage arrière 63, et toute la périphérie du joint 19, c'est-à-dire avant que le joint 19 coopère radialement de manière étanche avec le corps 6. Le coincement du corps 12 dans le corps 6 est évité et le guidage de l'élément 12 dans le corps 6 est favorisé.

Pour déverrouiller le raccord 1, il est nécessaire qu'un opérateur manoeuvre simultanément chaque levier 15 en appuyant sur son extrémité arrière 15B à l'encontre des efforts de rappel des ressorts 23. Les extrémités avant 15A des leviers 15 se dégagent radialement hors des rainures 141 au niveau axial des encoches 145, et atteignent leur position de libération, dans laquelle les leviers 15 ne bloquent pas les pions 8 dans les encoches 145. Les pions 8 peuvent alors sortir des encoches 145 lorsqu'un opérateur réalise un mouvement de rotation du corps 6 de l'élément complémentaire 2 par rapport à la bague de verrouillage 14.

Lorsque chaque pion 8 sort de son encoche 145, les efforts de répulsion générés par les soupapes 7 et 13, qui sont chargées élastiquement par les ressorts 9 et 22, entrainent les pions 8 en direction de l'embouchure 143 des rainures 141, ce qui a pour effet de séparer les éléments 2 et 4 et de ramener le raccord 1 en configuration désaccouplée.

Afin de dévisser l'élément complémentaire 2 de sa canalisation C1, lorsque le raccord 1 est en configuration accouplée et que les pions 8 sont verrouillés dans les encoches 145, l'opérateur ferme préalablement l'alimentation en fluide pour interrompre la circulation de fluide dans le canal C, entre les canalisations C1 et C2.

Un opérateur fait coopérer un outil avec l'empreinte 148 de la bague de verrouillage 14, et entraine en rotation la bague 14 dans le sens correspondant au dévissage de l'élément complémentaire 2 avec le support 100. Les contacts surfaciques entre les pions 8 et les leviers 15 transmettent ce couple au corps 6 de l'élément complémentaire 2, ce qui a pour effet de dévisser l'élément 2 de la canalisation C1.

Lorsque le couple de dévissage est élevé, en particulier pour les raccords 1 ayant un canal C de grand diamètre, l'effort de dévissage appliqué sur les leviers 15 a tendance à détériorer les leviers 15. Aussi, il est préférable, avant de dévisser l'élément complémentaire 2, de désaccoupler le raccord 1 et de le ré-accoupler en engageant les pions 8 dans la partie 145B des encoches 145 opposée à celle utilisée pour le vissage de l'élément complémentaire 2 sur le support 100, afin d'entrainer en rotation le corps 6 de l'élément complémentaire 2 par l'intermédiaire du contact surfacique entre les pions 8 et le fond 147B de la partie 145B des encoches 145, comme représenté à la figure 9.

Le verrouillage des éléments 2 et 4 est effectué par le système à baïonnette et par les leviers 15, qui peuvent être contrôlés visuellement de l'extérieur, ce qui est avantageux. De plus, lors du verrouillage, lorsque les leviers 15 sont rappelés en position de blocage au terme de la phase de verrouillage, l'impact entre les leviers 15 et les arbres 162 produit un son permettant à l'opérateur de s'assurer du verrouillage correct du raccord 1.

Le raccord 1 comprend un seul joint d'étanchéité 19 rapporté, qui est disposé sur la surface externe du corps 12 de l'élément 4, en dehors du canal C de circulation du fluide. Le joint 19 est disposé dans l'espace annulaire E, qui est accessible en configuration désaccouplée sans démonter la bague de verrouillage 14 ou les leviers 15, ce qui facilite la maintenance tout en protégeant le joint 19 par la bague de verrouillage 14 en configuration désaccouplée du raccord 1. En particulier, le joint 19 est formé par un tore de section radiale, c'est-à-dire dans un plan de section de direction radiale passant par l'axe longitudinal X-X, circulaire et le diamètre externe D19 de la section radiale du joint 19, correspondant à la dimension radiale maximale de la section radiale du joint 19, est inférieur à la dimension radiale minimale D1 de la portion de l'espace annulaire E en avant du joint 19, c'est-à-dire délimitée axialement par le logement 126 et la face avant 14A de la bague 14. On ménage ainsi un espace suffisant pour le montage et le démontage du joint 19 vers ou depuis le logement 126. Le joint 19 pouvant être remplacé facilement, par exemple avant chaque accouplement, il est envisageable d'utiliser un joint classique peu onéreux. Par exemple, dans le cas d'un fluide à haute température, le joint 19 n'est pas nécessairement prévu pour résister aux hautes températures, ce qui est moins onéreux.

Le joint 19 réalise une étanchéité radiale entre les corps 6 et 12, c'est-à-dire que le joint 19 coopère radialement de manière étanche avec le corps 6 en configuration accouplée, ce qui garantit l'étanchéité même en cas de vibrations.

La bague de verrouillage 14 peut être montée par l'avant du corps 12 de l'élément 4. Ainsi, contrairement au raccord conforme à EP-A-2 141 402, le choix du diamètre de l'extrémité arrière 12B du corps 12, raccordée à la canalisation C2, est indépendant du diamètre interne minimum de la bague de verrouillage 14. Il n'est donc pas nécessaire de prévoir une bague intermédiaire dans le cas des applications où la canalisation C2 a un fort diamètre, ce qui permet de s'affranchir également de la présence d'éléments d'étanchéité supplémentaires. Cela limite les risques de fuites pour les applications à haute température. Le montage des billes 18 se fait par la rainure 141 si bien qu'aucun autre aménagement n'est nécessaire sur la bague de verrouillage 14.

Le montage de la bague de verrouillage 14 autour du corps 12 est réalisé de manière simple par les billes 18 et le deuxième anneau élastique métallique 17. Le démontage de la bague de verrouillage 14, selon la procédure inverse à celle décrite pour son montage, est également simple,non destructif et ne nécessite pas de démonter la canalisation C2 de l'élément 4, ce qui permet de nettoyer régulièrement la surface externe du corps 12 et en particulier le logement 126 du joint 19.

Le double guidage des corps 6 et 12 des éléments 2 et 4 permet de limiter les sollicitations mécaniques du joint 19 en cas de vibrations. En particulier, lors de l'accouplement, la double coopération des étages 62 et 63 avec les étages 121 et 123 commence avant le contact de l'extrémité avant 6A du corps 6 de l'élément complémentaire 2 avec le joint 19. Ceci limite les efforts mécaniques encaissés par le joint 19, ce qui permet d'augmenter la durée de vie du joint 19 et d'améliorer l'étanchéité.

L'indexage angulaire des éléments 2 et 4 est effectif avant le contact des pions 8 avec les leviers 15, ce qui facilite l'accouplement en aveugle, par exemple lorsque toute la longueur de l'élément complémentaire 2 est encastrée dans son support 100. En variante, l'indexage peut être réalisé préalablement à l'engagement des pions 8 dans les rainures 141, par coopération d'éléments du corps 6 autres que les pions 8 avec le corps 12.

Pour permettre le vissage et le dévissage de l'élément complémentaire 2 avec son support 100, lorsque l'élément complémentaire 2 est verrouillé dans l'élément 4, la bague de verrouillage 14 peut être manoeuvrée, au lieu d'utiliser un outillage spécifique manoeuvrant l'élément complémentaire 2. Cela permet de réduire l'encombrement axial de l'élément complémentaire 2, qui ne doit alors pas nécessairement dépasser du puits formé par le support 100.

Le guidage en rotation de la bague de verrouillage 14 est réalisé par les billes 18, qui assurent une bonne précision de guidage. Lors de la rotation de la bague 14 en vue du verrouillage ou du déverrouillage, du vissage ou du dévissage, la canalisation C2 n'est pas sollicitée en torsion.

Le double guidage des corps 6 et 12 des éléments 2 et 4 en position verrouillée du raccord 1 assure un entrainement en rotation précis du corps 6 de l'élément complémentaire 2, ce qui permet de visser ou dévisser l'élément complémentaire 2 sans coincement et sans détériorer le joint 19.

La structure du raccord 1, avec deux rainures 141 et deux pions 8 diamétralement opposés, permet d'optimiser la géométrie des surfaces en contact lors des opérations de vissage et de dévissage.

En variante, les pions 8 peuvent être répartis autour de l'axe X-X avec un angle α différent de 180°. Par ailleurs, les pions 8 peuvent être de largeurs différentes. Les rainures 141 sont alors également de largeurs L141 différentes pour s'adapter à la largeur L8 de chaque pion 8. Ces variantes permettent un détrompage, avantageux pour ne pas confondre les circuits si plusieurs raccords de type 1 sont utilisés à proximité.

Les parties S81 A et S81 B non parallèles des surfaces latérales S81 des pions 8 permettent d'optimiser les contacts selon que les pions 8 butent en fond d'encoche 147A, 147B ou contre le levier 15. Les surfaces S81A et S81B sont ménagées sur chaque surface latérale S81 pour optimiser les contacts selon que les pions 8 sont mis en place dans l'une ou l'autre des parties 145A ou 145B des encoches 145.

En configuration accouplée, les contacts surfaciques axiaux entre les surfaces arrière S82 des pions 8 et les encoches 145, ainsi que les contacts surfaciques entre les premières surfaces S81A des pions 8 et les parois de fond 147 et les contacts surfaciques entre les deuxièmes surfaces S81 B des pions 8 et les leviers 15, ont une aire étendue. Ainsi, le verrouillage par baïonnette est très robuste, en particulier lorsque le raccord 1 est soumis à des vibrations.

La face plane 132 de la soupape 13 est affleurante dans la direction longitudinale avec la face avant de l'extrémité avant 12A du corps 12 en configuration désaccouplée du raccord 1, pour limiter les risques de pollution.

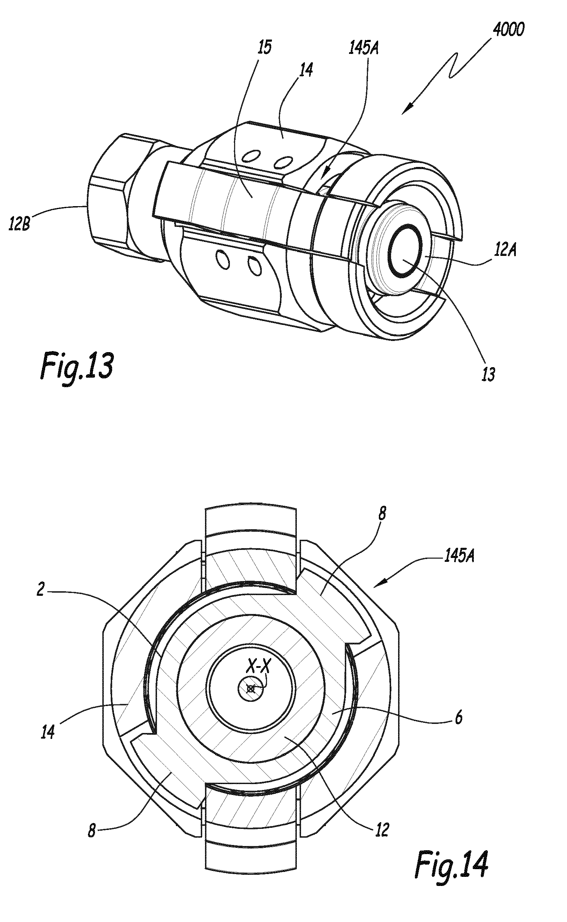

Les figures 13 et 14 montrent un élément de raccord 4000 conforme à une variante de l'invention, dans laquelle les encoches 145 comportent chacune une seule partie 145A s'étendant d'un seul côté de la rainure 141 correspondante. Dans ce cas, le verrouillage de la bague 14 est possible grâce à une rotation de la bague 14 uniquement dans un seul sens, correspondant au sens d'entrée des pions 8 dans les encoches 145A.

Dans une autre variante de l'invention, non représentée, les billes 18 sont remplacées par d'autres éléments de solidarisation tels que des rouleaux ou par des simples obstacles tels que des ergots montés dans des logements répartis autour de l'axe X-X. Dans ce dernier cas, la bague de verrouillage 14 peut ne pas être mobile en rotation par rapport au corps 12.

Dans les modes de réalisation représentés sur les figures, la rotation de la bague de verrouillage 14 par rapport au corps 12 permet, lors du verrouillage et du déverrouillage, de ne pas solliciter en torsion la canalisation C2 lorsque cette dernière est reliée à l'élément 4 avant le verrouillage ou le déverrouillage.

Lorsque la bague de verrouillage 14 n'est pas mobile autour du corps 12, les leviers 15 peuvent être montés articulés en rotation sur le corps 12 dans la rainure 141.

Dans une autre variante de l'invention, l'orientation des encoches 145 est oblique par rapport à l'axe longitudinal X-X et comprend à la fois une composante axiale et une composante circonférentielle. Lorsque la composante axiale est dirigée vers l'avant dans le sens de progression des pions 8 dans les encoches 145, l'encombrement axial du raccord 1 est augmenté et une surcourse de l'élément complémentaire 2 dans l'élément 4 est nécessaire pour l'accouplement. Lorsque la composante axiale est dirigée vers l'arrière, les efforts de verrouillage encaissés par les leviers 15 sont accentués.

Les filetages 64 et 127 pour le raccordement des corps 6 et 12 des éléments 2 et 4 aux canalisations C1 et C2 sont internes mais en variante ils peuvent être externes.

Les pions 8 peuvent être remplacés par des parties de géométrie différente en saillie radiale par rapport au corps 6 de l'élément complémentaire 2.

Dans une autre variante non représenté, seul l'élément 4 ou l'élément complémentaire 2 est équipé d'une soupape 13 ou 17.

Dans le cadre de l'invention, les différentes variantes décrites peuvent être combinées entre elles, au moins partiellement. Par exemple, il est envisageable de prévoir une bague de verrouillage 14 comportant des encoches 145 qui ne comprennent qu'une seule partie 145A ou 145B, en combinaison avec une encoche 145 orientée obliquement.

## Revendications

1. Raccord (1) adapté pour la jonction amovible de canalisations (C1, C2), comprenant un élément de raccord (4) et un élément de raccord complémentaire (2) aptes à s'emmancher l'un dans l'autre selon un axe longitudinal (X-X), l'élément de raccord (4) comprenant :
- un premier corps (12),
- une bague de verrouillage (14) montée autour du premier corps (12),
- des moyens de solidarisation en translation du premier corps (12) avec la bague de verrouillage (14),
la bague de verrouillage (14) comprenant :
- une rainure (141) apte à recevoir une partie en saillie (8) radiale d'un deuxième corps (6) de l'élément complémentaire (2),
- une encoche de verrouillage (145) dans laquelle la partie en saillie (8) est apte à être verrouillée axialement selon l'axe longitudinal (X-X) par rapport au premier corps (12),
**caractérisé en ce que** l'élément de raccord (4) comprend un levier (15) mobile en rotation radialement dans la rainure (141) entre une position de blocage dans laquelle le levier (15) bloque la partie en saillie (8) dans l'encoche (145) et une position de libération dans laquelle le levier (15) autorise le passage de la partie en saillie (8) entre l'encoche (145) et la rainure (141), **en ce que** des moyens élastiques (23) sont aptes à rappeler le levier (15) vers la position de blocage, **en ce que** l'élément de raccord (4) comprend un joint d'étanchéité (19) monté dans un logement (126) ménagé sur une surface externe du premier corps (12) et **en ce que** le joint d'étanchéité (19) est apte à coopérer radialement avec le deuxième corps (6) en configuration accouplée.

2. Raccord (1) selon la revendication 1, **caractérisé en ce que** l'élément de raccord (4) et/ou l'élément de raccord complémentaire (2) comprennent une soupape (7, 13) chargée élastiquement (9, 22) en direction d'un siège (61, 120) formé dans le corps (6, 12) de l'élément de raccord (2, 4) recevant cette soupape et **en ce qu'**en configuration désaccouplée, chaque soupape (7, 13) est en contact direct étanche avec le siège (61, 120).

3. Raccord (1) selon l'une des revendications précédentes, **caractérisé en ce que** le joint (19) est disposé dans un espace annulaire (E), délimité radialement entre le premier corps (12) et la bague de verrouillage (14), et **en ce que** l'épaisseur radiale minimale (D1) de l'espace annulaire (E) en avant du joint (19) est supérieure à la dimension radiale maximale (D19) de la section radiale du joint (19).

4. Raccord (1) selon l'une des revendications précédentes, **caractérisé en ce que** les moyens de solidarisation comprennent au moins une butée axiale (17) et un élément de solidarisation (18), tel qu'une bille, coopérant avec une partie arrière (14B) de la bague de verrouillage (14), et **en ce que** sur la longueur d'une partie avant (A4) de l'élément de raccord (4), délimitée par la partie arrière (14B) de la bague de verrouillage (14) et prise le long de l'axe longitudinal (X-X), la dimension radiale externe maximale du premier corps (12) est inférieure à la dimension radiale interne minimale de la partie arrière (14B) de la bague de verrouillage (14).

5. Raccord (1) selon la revendication 4, **caractérisé en ce qu'**une surface arrière (129) du premier corps (12) coopérant avec la partie arrière (14B) de la bague de verrouillage (14) a un diamètre (D129) inférieur à la dimension radiale interne minimale de la partie arrière (14B) de la bague de verrouillage (14) et **en ce qu'**une première distance (d1), mesurée parallèlement à l'axe longitudinal (X-X) entre l'élément de solidarisation (18) et la paroi de fond (144) de la rainure (141), est inférieure à une deuxième distance (d2), mesurée parallèlement à l'axe longitudinal (X-X) entre la partie arrière (14B) de la bague de verrouillage (14) et l'extrémité arrière (129B) de la surface arrière (129).

6. Raccord (1) selon l'une des revendications 4 ou 5, **caractérisé en ce que** les moyens de solidarisation comprennent une couronne de billes (18) disposées dans une rainure externe (122) du premier corps (12) et recouvertes radialement par la bague de verrouillage (14).

7. Raccord (1) selon l'une des revendications précédentes, **caractérisé en ce que** la surface externe du premier corps (12) comprend deux étages externes (121, 123) dont les diamètres (D121, D123) augmentent le long de l'axe longitudinal (X-X), dans une direction allant de l'extrémité avant (12A) vers l'extrémité arrière (12B) du premier corps (12), **en ce que** la surface interne du deuxième corps (6) comprend deux étages internes (62, 63) respectivement complémentaires aux deux étages externes (121, 123) et **en ce que** les deux étages externes (121, 123) coopèrent avec les deux étages internes (62, 63) dans la configuration accouplée du raccord (1).

8. Raccord (1) selon la revendication 7, **caractérisé en ce que** en cours d'accouplement du raccord (1), les deux étages externes (121, 123) coopèrent avec les deux étages internes (62, 63) avant que le joint (19) coopère radialement de manière étanche avec le deuxième corps (6).

9. Raccord (1) selon l'une des revendications précédentes, **caractérisé en ce que** le raccord comprend des moyens d'indexage (141, 8) permettant de positionner la bague de verrouillage (14) et le deuxième corps (6) l'un par rapport à l'autre autour de l'axe longitudinal (X-X) dans une configuration indexée qui intervient, en cours d'accouplement du raccord (1), avant le contact entre la partie en saillie (8) et le levier (15).

10. Raccord (1) selon l'une des revendications précédentes, **caractérisé en ce que** lorsque la partie en saillie (8) est bloquée dans l'encoche (145), une surface latérale (S81A) de la partie en saillie (8) est apte à venir en contact surfacique avec une paroi de fond (147) de l'encoche (145).

11. Raccord (1) selon l'une des revendications précédentes, **caractérisé en ce que**, lorsque la partie en saillie (8) est bloquée dans l'encoche (145), une surface latérale (S81 B) de la partie en saillie (8) est apte à venir en contact surfacique avec le levier (15) et **en ce que** la normale au contact surfacique entre la surface latérale (S81 B) de la partie en saillie (8) et le levier (15) est orientée selon une direction parallèle à l'axe de rotation (X15) du levier (15).

12. Raccord (1) selon l'une des revendications précédentes, **caractérisé en ce que** lorsque la partie en saillie (8) est bloquée dans l'encoche (145), une extrémité arrière (S82) de la partie en saillie (8) est apte à venir en contact surfacique avec un bord avant (145.1) de l'encoche (145).

13. Raccord (1) selon l'une des revendications précédentes, **caractérisé en ce que** l'encoche (145) s'étend selon une direction circonférentielle par rapport à l'axe longitudinal (X-X).

14. Raccord (1) selon l'une des revendications précédentes, **caractérisé en ce que** chaque rainure (141) est orientée selon l'axe longitudinal (X-X), et **en ce que** pour chaque rainure, l'encoche de verrouillage (145) comprend une première partie (145A) et une deuxième partie (145B) s'étendant de part et d'autre de la rainure (141), l'élément en saillie (8) pouvant être reçu dans la première ou la deuxième partie de l'encoche (145).

15. Raccord (1) selon l'une des revendications précédentes, **caractérisé en ce que** la surface externe de la bague de verrouillage (14) est pourvue d'une empreinte d'outil (148), notamment six pans, ménagée autour de l'axe longitudinal (X-X).

## Patentansprüche

1. Kupplung (1), angepasst für die lösbare Verbindung von Leitungen (C1, C2), umfassend ein Kupplungselement (4) und ein komplementäres Kupplungselement (2), die geeignet sind, gemäß einer Längsachse (X-X) ineinanderzugreifen, wobei das Kupplungselement (4) umfasst:
- einen ersten Körper (12),
- einen Verriegelungsring (14), der um den ersten Körper (12) herum montiert ist,
- Mittel zur Verbindung des ersten Körpers (12) mit dem Verriegelungsring (14) in Längsrichtung,
wobei der Verriegelungsring (14) umfasst:
- eine Nut (141), die geeignet ist, ein radiales vorspringendes Teil (8) eines zweiten Körpers (6) des komplementären Elements (2) aufzunehmen,
- einen Verriegelungseinschnitt (145), in dem das vorspringende Teil (8) axial gemäß der Längsachse (X-X) in Bezug auf den ersten Körper (12) verriegelt werden kann,
**dadurch gekennzeichnet, dass** das Kupplungselement (4) einen Hebel (15) umfasst, der zur radialen Drehung in der Nut (141) zwischen einer Blockierposition, in der der Hebel (15) das vorspringende Teil (8) in dem Einschnitt (145) blockiert, und einer Freigabeposition, in der der Hebel (15) den Durchgang des vorspringenden Teils (8) zwischen dem Einschnitt (145) und der Nut (141) zulässt, beweglich ist, dass elastische Mittel (23) geeignet sind, den Hebel (15) in die Blockierposition zu bringen, dass das Kupplungselement (4) eine Dichtung (19) umfasst, die in einem auf der Außenfläche des ersten Körpers (12) eingearbeiteten Aufnahmeraum (126) montiert ist, und dass die Dichtung (19) geeignet ist, radial mit dem zweiten Körper (6) in der gekuppelten Stellung zusammenzuarbeiten.

2. Kupplung (1) nach Anspruch 1, **dadurch gekennzeichnet, dass** das Kupplungselement (4) und/oder das komplementäre Kupplungselement (2) ein Ventil (7,13) umfasst, das elastisch (9, 22) in Richtung eines Sitzes (61, 120) vorgespannt ist, der in dem Körper (6,12) des dieses Ventil aufnehmenden Kupplungselements (2, 4) gebildet ist, und dass in der entkuppelten Stellung jedes Ventil (7,13) in direktem dichtem Kontakt mit dem Sitz (61, 120) ist.

3. Kupplung (1) nach einem der vorhergehenden Ansprüche, **dadurch gekennzeichnet, dass** die Dichtung (19) in einem Ringraum (E) angeordnet ist, der radial zwischen dem ersten Körper (12) und dem Verriegelungsring (14) begrenzt ist, und dass die minimale radiale Dicke (D1) des Ringraums (E) vor der Dichtung (19) größer als die maximale radiale Abmessung (D19) des radialen Querschnitts der Dichtung (19) ist.

4. Kupplung (1) nach einem der vorhergehenden Ansprüche, **dadurch gekennzeichnet, dass** die Mittel zum Verbinden mindestens einen axialen Anschlag (17) und ein Verbindungselement (18), wie eine Kugel, umfassen, die mit einem Rückteil (14B) des Verriegelungsrings (14) zusammenarbeiten, und dass über die Länge eines Vorderteils (A4) des Kupplungselements (4), begrenzt durch das Rückteil (14B) des Verriegelungsrings (14) und entlang der Längsachse (X-X) genommen, die maximale radiale Außenabmessung des ersten Körpers (12) kleiner als die minimale radiale Außenabmessung des Rückteils (14B) des Verriegelungsrings (14) ist.

5. Kupplung (1) nach Anspruch 4, **dadurch gekennzeichnet, dass** eine Rückfläche (129) des ersten Körpers (12), die mit dem Rückteil (14B) des Verriegelungsrings (14) zusammenarbeitet, einen Durchmesser (D129) aufweist, der geringer als die minimale radiale lnnenabmessung des Rückteils (14B) des Verriegelungsrings (14) ist, und dass eine erste Distanz (d1), gemessen parallel zur Längsachse (X-X) zwischen dem Verbindungselement (18) und der Bodenwand (144) der Nut (141), kleiner ist als eine zweite Distanz (d2), gemessen parallel zur Längsachse (X-X) zwischen dem Rückteil (14B) des Verriegelungsrings (14) und dem Rückende (129B) der Rückfläche (129).

6. Kupplung (1) nach einem der Ansprüche 4 oder 5, **dadurch gekennzeichnet, dass** die Mittel zum Verbinden einen Kugelkranz (18) umfassen, wobei die Kugeln in einer Außennut (122) des ersten Körpers (12) angeordnet sind und radial durch den Verriegelungsring (14) abgedeckt sind.

7. Kupplung (1) nach einem der vorhergehenden Ansprüche, **dadurch gekennzeichnet, dass** die Außenfläche des ersten Körpers (12) zwei Außenstufen (121, 123) aufweist, deren Durchmesser (D121, D123) sich entlang der Längsachse (X-X) in einer Richtung vom Vorderende (12A) zum Rückende (12B) des ersten Körpers (12) vergrößert, dass die Innenfläche des zweiten Körpers (6) zwei jeweils zu den zwei Außenstufen (121, 123) komplementäre Innenstufen (62, 63) aufweist und dass die zwei Außenstufen (121, 123) mit den zwei Innenstufen (62, 63) in der gekuppelten Stellung der Kupplung (1) zusammenarbeiten.

8. Kupplung (1) nach Anspruch 7, **dadurch gekennzeichnet, dass** während des Kuppelns der Kupplung (1) die zwei Außenstufen (121, 123) mit den zwei Innenstufen (62, 63) zusammenarbeiten, bevor die Dichtung (12) radial in dichter Weise mit dem zweiten Körper (6) zusammenarbeitet.

9. Kupplung (1) nach einem der vorhergehenden Ansprüche, **dadurch gekennzeichnet, dass** die Kupplung Mittel (141, 8) zur Indexierung umfasst, die es ermöglichen, den Verriegelungsring (14) und den zweiten Körper (6) zueinander um die Längsachse (X-X) in einer indexierten Stellung zu positionieren, die während des Kuppelns der Kupplung (1) vor dem Kontakt zwischen dem vorspringenden Teil (8) und dem Hebel (15) zustande kommt.

10. Kupplung (1) nach einem der vorhergehenden Ansprüche, **dadurch gekennzeichnet, dass**, wenn das vorspringende Teil (8) in dem Einschnitt (145) blockiert ist, eine Seitenfläche (S81A) des vorspringenden Teils (8) in der Lage ist, in Flächenkontakt mit einer Bodenwand (147) des Einschnitts (145) zu kommen.

11. Kupplung (1) nach einem der vorhergehenden Ansprüche, **dadurch gekennzeichnet, dass**, wenn das vorspringende Teil (8) in dem Einschnitt (145) blockiert ist, eine Seitenfläche (S81B) des vorspringenden Teils (8) in der Lage ist, in Flächenkontakt mit dem Hebel (15) zu kommen, und dass die Senkrechte zu dem Flächenkontakt zwischen der Seitenfläche (S81B) des vorspringenden Teils (8) und des Hebels (15) in einer Richtung parallel zur Drehachse (X15) des Hebels (15) ausgerichtet ist.

12. Kupplung (1) nach einem der vorhergehenden Ansprüche, **dadurch gekennzeichnet, dass**, wenn das vorspringende Teil (8) in dem Einschnitt (145) blockiert ist, ein Rückende (S82) des vorspringenden Teils (8) in der Lage ist, in Flächenkontakt mit einem Vorderrand (145.1) des Einschnitts (145) zu kommen.

13. Kupplung (1) nach einem der vorhergehenden Ansprüche, **dadurch gekennzeichnet, dass** der Einschnitt (145) sich gemäß einer Umfangsrichtung in Bezug auf die Längsachse (X-X) erstreckt.

14. Kupplung (1) nach einem der vorhergehenden Ansprüche, **dadurch gekennzeichnet, dass** jede Nut (141) gemäß der Längsachse (X-X) ausgerichtet ist und dass für jede Nut der Verriegelungseinschnitt (145) einen ersten Teil (145A) und einen zweiten Teil (145B) umfasst, die sich beidseitig der Nut (141) erstrecken, wobei das vorspringende Teil (8) in dem ersten oder dem zweiten Teil des Einschnitts (145) aufgenommen werden kann.

15. Kupplung (1) nach einem der vorhergehenden Ansprüche, **dadurch gekennzeichnet, dass** die Außenfläche des Verriegelungsrings (14) mit einem Werkzeugeindruck (148), insbesondere einem Sechskant, versehen ist, der um die Längsachse (X-X) herum angeordnet ist.

## Claims

1. A coupling (1) for the disconnectable connection of pipelines (C1, C2), comprising a coupling element (4) and a complementary coupling element (2) that can fit into one another along a longitudinal axis (X-X), the coupling element (4) comprising:
- a first body (12),
- a Locking ring (14) mounted around the first body (12),
- means for securing the first body (12) in translation with the locking ring (14),
the locking ring (14) comprising:
- a slot (141) able to receive a part (8) radially protruding from a second body (6) of the complementary element (2),
- a locking notch (145) in which the protruding part (8) can be axially locked along the longitudinal axis (X-X) relative to the first body (12),
**characterized in that** the coupling element (4) comprises a lever (15) able to be radially rotated in the slot (141) between a locking position in which the lever (15) locks the protruding part (8) in the notch (145) and a released position in which the lever (15) allows the protruding part (8) to pass between the notch (145) and the slot (141), **in that** the elastic means (23) can recall the lever (15) toward the locking position, **in that** the coupling element (4) comprising a sealing gasket (19) mounted in a housing (126) arranged on an outer surface of the first body (12) and **in that** the sealing gasket (19) can cooperate radially with the second body (6) in the coupled configuration.

2. The coupling (1) according to claim 1, **characterized in that** the coupling element (4) and/or the complementary coupling element (2) comprise a valve (7, 13) elastically loaded (9, 22) toward a seat (61, 120) formed in the body (6, 12) of the coupling element (2, 4) receiving that valve and **in that** in the uncoupled configuration, each valve (7, 13) is in direct sealed contact with the seat (61, 120).

3. The coupling (1) according to one of the preceding claims, **characterized in that** the seal (19) is arranged in an annular space (E), radially delimited between the first body (12) and the locking ring (14), and **in that** the minimum radial thickness (D1) of the annular space (E) in front of the seal (19) is larger than the maximum radial dimension (D19) of the radial section of the seal (19).

4. The coupling (1) according to one of the preceding claims, **characterized in that** the securing means comprise at least one axial stop (17) and a securing element (18), such as a bead, cooperating with a rear part (14B) of the locking ring (14), and **in that** over the length of a front part (A4) of the coupling element (4), delimited by the rear part (14B) of the locking ring (14) and considered along the longitudinal axis (X-X), the maximum outer radial dimension of the first body (12) is smaller than the minimum inner radial dimension of the rear part (14B) of the locking ring (14)

5. The coupling (1) according to claim 4, **characterized in that** a rear surface (129) of the first body (12) cooperating with the rear part (14B) of the locking ring (14) has a diameter (D129) smaller than the minimum inner radial dimension of the rear part (14B) of the locking ring (14) and **in that** a first distance (d1), measured parallel to the longitudinal axis (X-X) between the securing element (18) and the bottom wall (144) of the slot (141), is smaller than a second distance (d2), measured parallel to the longitudinal axis (X-X) between the rear part (14B) of the locking ring (14) and the rear end (129B) of the rear surface (129),

6. The coupling (1) according to one of claims 4 or 5, **characterized in that** the securing means comprise a crown of beads (18) positioned in an outer slot (122) of the first body (12) and radially covered by the locking ring (14).

7. The coupling (1) according to one of the preceding claims, **characterized in that** the outer surface of the first body (12) comprises two outer stages (121, 123), the diameters (D121, D123) of which increase along the longitudinal axis (X-X), in a direction going from the front end (12A) toward the rear end (12B) of the first body (12), **in that** the inner surface of the second body (6) comprises two inner stages (62, 63) respectively complementary to the two outer stages (121, 123) and **in that** the two outer stages (121, 123) cooperate with the inner stages (62, 63) in the coupled configuration of the coupling (1).

8. The coupling (1) according to claim 7, **characterized in that** during coupling of the coupler (1), the two outer stages (121, 123) cooperate with the two inner stages (62, 63) before the seal (19) cooperates radially and sealably with the second body (6).

9. The coupling (1) according to one of the preceding claims, **characterized in that** the coupling comprises indexing means (141, 8) making it possible to position the locking ring (14) and the second body (6) relative to one another around a longitudinal axis (X-X) in an indexed configuration which, during coupling of the coupler (1), takes place before contact between the protruding part (8) and the lever (15)

10. The coupling (1) according to one of the preceding claims, **characterized in that** when the protruding part (8) is locked in a notch (145), a lateral surface (S81A) of the protruding part (8) can come into surface contact with a bottom wall (147) of the notch (145).

11. The coupling (1) according to one of the preceding claims, **characterized in that** when the protruding part (8) is locked in the notch (145), a side surface (S81B) of the protruding part (8) can come into surface contact with the lever (15) and **in that** the normal to the surface contact between the lateral surface (S81B) of the protruding part (8) and the lever (15) is oriented in a direction parallel to the axis of rotation (X15) of the lever (15),

12. The coupling (1) according to one of the preceding claims, **characterized in that** when the protruding part (8) is locked in the notch (145), a rear end (S82) of the protruding part (8) can come into surface contact with a front edge (145.1) of the notch (145).

13. The coupling (1) according to one of the preceding claims, **characterized in that** the notch (145) extends in a circumferential direction relative to the longitudinal axis (X-X).

14. The coupling (1) according to one of the preceding claims, **characterized in that** each slot (141) is oriented along the longitudinal axis (X-X), and **in that** for each slot, the locking notch (145) comprises a first part (145A) and a second part (145B) extending on either side of the slot (141), the protruding element (8) being able to be received in the first or second part of the notch (145).

15. The coupling (1) according to one of the preceding claims, **characterized in that** the outer surface of the locking ring (14) is provided with a tool cavity (148), in particular with six faces, arranged around a longitudinal axis (X-X)
